# EUROPEAN PATENT SPECIFICATION

(11) **EP 1 925 891 B1**
(45) Date of publication and mention of the grant of the patent: **02.07.2014**
(21) Application number: 07386027.2
(22) Date of filing: 20.11.2007
(51) Int. Cl.: F24J 2/52, F24J 2/54

(54) **Photovoltaic power station**
Vorrichtung zur Erzeugung von photovoltaischer Energie
Station de production d'énergie photovoltaïque

(30) Priority: 21.11.2006 GR 20060100634
(43) Date of publication of application: 28.05.2008
(73) Proprietor: Gamanis, George A., 552 36 Panorama, Thessaloniki (GR)
(72) Inventor: Gamanis, George A., 552 36 Panorama, Thessaloniki (GR)

(56) References cited:
- DE-A1- 3 500 694
- DE-U1- 7 726 729
- DE-U1- 20 217 671
- GR-B1- 1 004 187
- US-A- 2 986 241
- US-A- 3 974 600
- US-A- 5 448 868
- US-A- 5 934 271

## Description

### FIELD OF THE INVENTION

The present disclosure relates to a solar station having the features of the preamble of claim 1.

### BACKGROUND OF THE INVENTION

It is well known that the efficiency of photovoltaic power stations, which produce electrical energy from solar energy with the use of arrays of photovoltaic cells, is increased by 15% - 45% when these arrays are fixed on structures, each of which performs a rotational movement about a vertical axis, or rotational movements about a vertical and about a horizontal axis, so that the surfaces of the above-mentioned arrays of photovoltaic cells are continuously approximately perpendicular to the rays of the sun during its daily movement with respect to the earth.

It is also well known that in the above photovoltaic power stations the determination of the azimuthal and elevational angle of the sun is carried out with the use of a software, which is based on an algorithm for the determination of the position of the sun as a function of the geographical latitude and longitude of the position of the photovoltaic power station, the date and the time.

In photovoltaic power stations of this type the arrays of photovoltaic cells are fixed on flat structures, e.g. beam grids, or on flat space lattice configurations, which are mounted on rotation systems, each of which rotates about just one axis which is perpendicular to its horizontal bearing plane on a support or base, or rotates about two axes, one axis which is perpendicular to its horizontal bearing plane and one which is parallel to the same plane. The rotational movements of these rotation systems are realized with rotation mechanisms or rotation mechanisms with hydraulic cylinders, and their positioning with respect to the sun is achieved through one or two encoders and with the use of the above-mentioned software.

Photovoltaic power stations of this type are well known. They have, however, the following disadvantages:
- Each of the above-mentioned rotation systems rotates just one array of photovoltaic cells, which has a surface area of much less than 50 m .
- When each of the above-mentioned rotation systems rotates about just one axis (the vertical axis) and in this way the corresponding array of photovoltaic cells follows only the azimuthal angle of the sun (only the daily East-West movement and not the elevational angle), the efficiency of these arrays of photovoltaic cells is greater than the efficiency of the fixed, with respect to the earth, arrays. These rotation systems have a lower cost; they cannot, however, be constructed economically on a large scale.
- When each of the above-mentioned rotation systems rotates about two axes and in this way the corresponding array of photovoltaic cells follows both the azimuthal and elevational angle of the sun, the efficiency of these arrays of photovoltaic cells is maximum, but the rotation systems of this type cannot be constructed economically on a large scale. Each of the larger known rotation systems of this type rotates just one array of photovoltaic cells of total surface area of the order of 50 m² and since they are not strong enough against high wind velocities, high snow load and local concentrations of snow or ice, they have self-protection systems, e.g. at wind velocities above a limiting value they get a horizontal position in order to decrease the wind action, resulting in an expensive construction, without their reliability being increased at the same time.

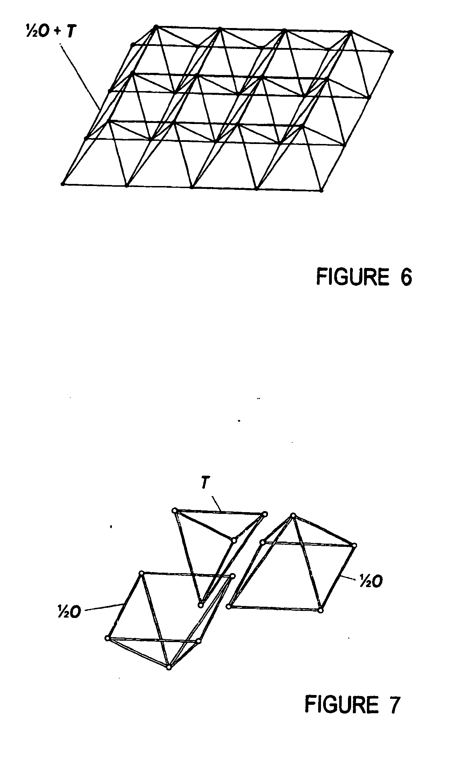

In particular, in photovoltaic power stations of this type which have flat space lattice configurations, e.g. like the one which is shown in figure 6, these space lattice configurations do not have integrity of their configuration, but acquire integrity (they become structures) only if they are supported (fixed) along their perimeter and in this way certain degrees of freedom are restrained. If these space lattice configurations are fixed, yet "free" in space, to rotation systems from central nodes, these rotation systems have to be strong enough and capable of restraining certain degrees of freedom of these configurations, so that these configurations acquire integrity and become structures.

Document DE7726729 discloses a construction for large-area solar collector installation comprising parabolic trough solar thermal collectors fixed on frames which are connected to a space lattice configuration. The space lattice configuration, having framework members interconnected in a pattern consisting of semi-octahedrons and tetrahedrons, or in a pattern consisting of right triangular prisms, is firmly or rotationally mounted on a base-plate. The base-plate rotates, with respect to a foundation, about just one axis which is perpendicular to the bearing plane of the foundation.

Document DE3500694 discloses a solar power station comprising at least two semiconductor solar cells and at least two flat frames, at least one space truss, and at least one foundation having a bearing plane. The at least two semiconductor solar cells are fixed on the at least two flat frames, the at least two flat frames are rotationally connected to the at least one space truss, and the at least one space truss rotates, with respect to the foundation, about just one axis which is perpendicular to the bearing plane.

Document GR1004187 discloses a space frame with flat-plated nodes and tubular framework members, particularly of thin-walled construction, in which the tubular framework member ends are form-flattened and bored having tubular inserts. The connection of the tubular framework members to the flat-plated nodes is carried out using bolts which are subject to double shear.

According to the best mode for carrying out the invention of document GR1004187, the flat-plated nodes are castings, e.g. steel castings produced using the shell molding process [DE832937; US2706163], the tubular framework member ends are preheated [using induction heating] immediately before their stamping (in order to avoid cracking), and the bolts in the assembled space frame are preloaded by tightening.

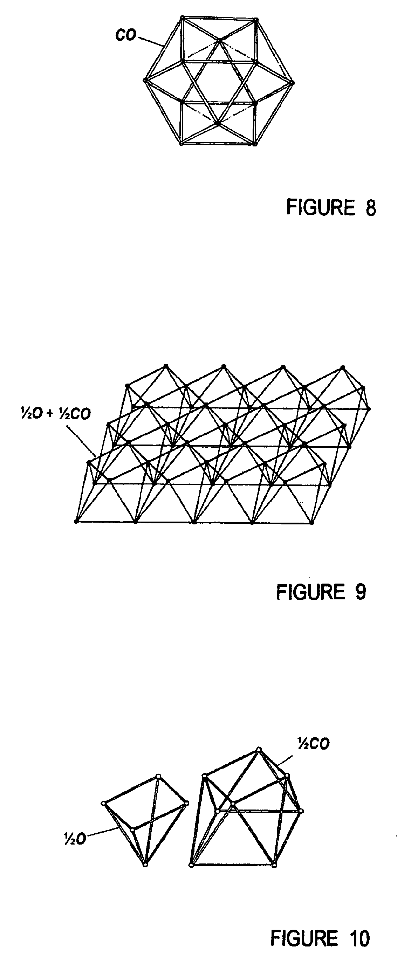

Furthermore, figure 7 of document GR1004187 refers to a space lattice configuration for building construction having framework members interconnected in a pattern consisting of semi-octahedrons and tetrahedrons; and figure 8 of the same document refers to a space lattice configuration, also for building construction, having framework members interconnected in a pattern consisting of semi-octahedrons and semi-cubeoctahedrons.

Also, document US2986241 refers to a space lattice configuration for building purposes having framework members interconnected in a pattern consisting of octahedrons and tetrahedrons.

In addition, document US3974600 discloses a modular structural system having a limited inventory of framework members which, in combination with a limited number of panels, can be utilized to erect a variety of integral structures in which the framework members bear substantially all loads, the panels being only required to resist local loads. Using this modular structural system, polyhedral frameworks are assembled into arrays of interlinked triangulated segments for optimum stability.

Finally, document US5448868 refers to space structures/frames, for architectural applications, based on seven different known periodic space grids composed of one edge-length and even-sided polygons. The space structures have two different polyhedra corresponding to the vertices of the source grids, and the space frames have one type and length of strut and two different shapes of nodes.

### BRIEF DESCRIPTION OF THE INVENTION

The aims of the present invention were both the elimination of the above-mentioned drawbacks and the realization of a photovoltaic power station which comprises arrays of photovoltaic cells, which perform translational and rotational movements, fixed, in subsets or groups, on space lattice structures whose sizes are such that the total surface area of photovoltaic cells per group is at least one order of magnitude (ten times) greater than the surface area of photovoltaic cells, which the largest known rotation systems of this type move.

This is achieved by a photovoltaic power station, which comprises a set of space lattice structures each of which has a foundation which bears a bearing plane, characterized in that:
- each of the above-mentioned space lattice structures has a set of flat structures which are firmly or rotationally connected to it and each flat structure bears an array of photovoltaic cells,
- each of the above-mentioned space lattice structures rotates, with respect to the above-mentioned foundation, about just one axis which is perpendicular to the above-mentioned bearing plane,
- each of the above-mentioned space lattice configurations comprising at least one semi-octahedron and at least one tetrahedron, further comprises at least one octahedron,
- each of the above-mentioned space lattice structures has *integrity* of its *configuration*, and
- each of the above-mentioned space lattice structures comprises at least one space lattice structure.

In order to configure space lattice structures according to the present invention, the interconnection of framework members is carried out in any suitable manner which is susceptible of industrial application and always according to generally accepted technical rules e.g. the structural Eurocodes.

In particular, in order to configure, according to the present invention, space lattice structures with framework members which have metal tubular ends, the interconnection of these framework members is carried out with standard node connectors or connection systems, so that the industrial manufacturing of both framework members and node connectors is carried out at minimum cost and according to generally accepted technical rules. Two manners of this type of interconnection are known from patent Nos. GR1004166, GR1004187.

According to the best mode contemplated for carrying out the present invention, the above-mentioned space frame structures are space lattice structures having thin walled tubular framework members interconnected at their ends through node connectors, e.g. according to patent No. GR1004187.

Some advantages of the present invention are that:
- It provides a high efficiency solution for the exploitation of solar energy, decreases the dependency on fossil fuels and, in consequence, it assists in the decrease of CO₂ emissions of a country.
- The realization of large scale photovoltaic power stations, which have electric power e.g. at least ten times greater than the electric power of the known photovoltaic power stations of this type, is made possible.
- Due to the greater distance of the arrays of photovoltaic cells from the surface of the earth, these arrays are better cooled by the wind and, in consequence, their efficiency is increased, particularly during the summer months.
- Due to the greater distance of the arrays of photovoltaic cells from the surface of the earth, these arrays have cleaner surfaces and, in consequence, higher efficiency.
- Because of the relatively high cost of photovoltaic cells, an increase in their annual output e.g. by 30%, as a result of the present invention, means an exceptionally high annual rate of return of investment which corresponds to the cost of the construction of the space lattice structures according to the present invention. With reference to the return period of the total investment, this period is decreased by approximately 20%.
- Due to the elevational arrangement of the arrays of photovoltaic cells, the construction of photovoltaic power stations according to the present invention becomes more economically viable in regions with high land cost.

### BRIEF DESCRIPTION OF THE DRAWINGS

The invention is described below with the aid of an example and with reference to the accompanying figures, in which:
Figure 1 shows a set of arrays of photovoltaic cells and a space lattice structure of a photovoltaic power station, according to the present invention.
Figure 2 shows a sectional view of the space lattice structure of figure 1.
Figure 3 shows a space lattice configuration of type ***O*** + ***T***, which is part of the space lattice structure of figure 1.
Figure 4 shows an octahedron and a tetrahedron of figure 3 assembled together.
Figure 5 shows the octahedron and the tetrahedron of figure 4 separated for clear illustration.
Figure 6 shows a space lattice configuration of type **½*O*** + ***T***, which is part of the space lattice structure of figure 1.
Figure 7 shows a tetrahedron and two semi-octahedrons of figure 6 separated for clear illustration.
Figure 8 shows a cubeoctahedron according to its definition in the description of the present invention.
Figure 9 shows a space lattice configuration of type ½***O*** + ½***CO***.
Figure 10 shows a semi-octahedron and a semi-cubeoctahedron of figure 9 separated for clear illustration.

### DETAILED DESCRIPTION OF THE INVENTION

Definitions of terms:
*Octahedron **O***.- Polyhedron which has eight, equal equilateral, triangular faces which are configured with interconnected framework members which can carry predominantly axial forces.
*Tetrahedron **T**.-* Polyhedron which has four, equal equilateral, triangular faces which are configured with interconnected framework members which can carry predominantly axial forces.
*Cubeoctahedron **CO**.-* Polyhedron which has eight, equal equilateral, triangular and six, equal, square faces which are configured with interconnected framework members which can carry predominantly axial forces, so that there are two triangular and two square faces at each vertex.
*Semi-octahedron ½**O**.-* Either one of the two equal polyhedra formed by the cross-section, perpendicular to an axis which passes through two opposite vertexes, of an octahedron. *Semi-cubeoctahedron ½**CO**.-* Either one of the two equal polyhedra formed by the cross-section, perpendicular to the axis which passes through the centers of two opposite square faces, of a cubeoctahedron and the addition of four equal framework members for the configuration of the square face of the cross-section.
*Space frame structure.-* A three-dimensional, as a whole, structure, which is configured with interconnected framework members which can carry predominantly axial forces, the *configuration* of which has *integrity* and which is characterized by complete vector equilibrium.
*Space lattice structure.-* A space frame structure which is configured with polyhedrons, which are selected from the set whose members are octahedron, tetrahedron, cubeoctahedron, semi-octahedron, semi-cubeoctahedron, and assembled in a face to face relationship. For example, a space lattice structure of type ***O*** + ***T*** is an assemblage of octahedrons and tetrahedrons in a face to face relationship.

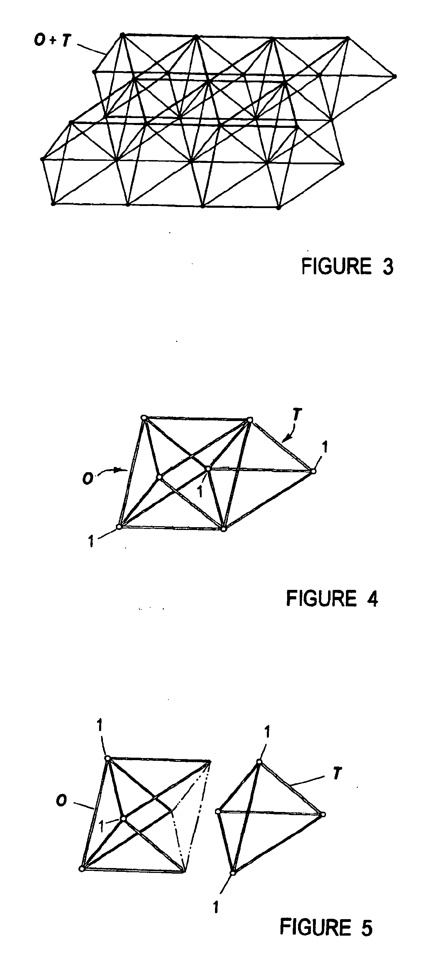

In order to illustrate the definitions of terms in the description of the present invention, reference is made first to figures 4 and 5.

Figure 4 shows an octahedron and tetrahedron assembled together, which are configured with a number of framework members pin-connected at their ends in any suitable manner, as by node connectors 1 which are susceptible of industrial application, so that the interconnection of framework members is carried out at minimum cost. The framework members are the edges and the node connectors 1 are the vertexes of the polyhedrons. The faces of the polyhedrons which are configured in this manner are left to be imagined.

In figure 5 the octahedron and the tetrahedron are separated for clear illustration of the forms of these two kinds of polyhedrons. The octahedron has twelve framework members and eight, equal equilateral, triangular faces. In figure 5, three of the framework members have been shown by dot-dash lines because, when the octahedron ***O*** and the tetrahedron ***T*** are assembled as in figure 4, these framework members are common to ***O*** and ***T***.

The space lattice configurations of type ½***O*** + ***T*** and ½***O*** + ½***CO*** of figures 6 and 9 are configured, with the polyhedrons of figures 7 and 10 respectively, in the same manner.

If we consider the integrity of the space lattice configuration which is shown in figure 4, this *configuration* has *integrity* and its structure is characterized by complete vector equilibrium. As will be illustrated herein below, every configuration which consists of octahedrons ***O*** and tetrahedrons ***T*** and is assembled as is shown in figure 3 has *integrity*; and its structure is characterized by complete vector equilibrium (in figure 3 some framework members are not shown for clear illustration). In addition, the main axes of all the octahedrons ***O*** are parallel; and the faces of the octahedrons ***O*** and tetrahedrons ***T*** have common planes, which form the plane surfaces of the space lattice configuration, in this way. The space lattice configurations of figures 4 and 3 are *space lattice structures*.

Since the concept of *integrity* is not obvious, it is emphasized that this concept is closely related to the concept of *configuration.* In other words, if we consider the space lattice structure with respect to the relative position of its parts, its *integrity* is related to the assemblage of relative positions.

When we say that a space lattice structure has *integrity*, this means that the configuration of the space lattice is constant, that is to say the assemblage of the relative positions of the node connectors and the framework members is constant. In other words, the geometry of the structure is constant. This means that: neither the configuration of the space lattice, nor any part of it, is a mechanism; nor is the configuration of the space lattice, nor any part of it, in a state of neutral equilibrium.

A space lattice structure according to the present invention, in which the framework members are pin-connected to the node connectors 1, is characterized in that it has integrity of its configuration; and the structure is characterized by complete vector equilibrium, independent of the boundary and loading conditions. We thus have a space lattice structure which behaves like a solid body.

The complete vector equilibrium of the configuration of a space lattice, in which the framework members are pin-connected to the node connectors 1, is a necessary and sufficient condition for the integrity of its configuration.

A necessary condition for the integrity of the configuration of a space lattice structure, in which the framework members are pin-connected at their ends, is: *E* = 3·*V - 6*, where the numbers of framework members and node connectors I are denoted by *E* and *V*, and *6* is the minimum number of support reactions, considering that the space lattice structure behaves like a solid body.

The above necessary condition is particularly useful because, if this is not satisfied, it proves that we do not have integrity of the configuration of a space lattice; and, as a consequence, that the space lattice structure is not characterized by complete vector equilibrium.

Three manners for the realization of space lattice structures, the configurations of which have integrity and which are characterized by complete vector equilibrium, are described below.

The first manner is to start with a triangle, which is configured with three framework members pin-connected to three node connectors 1, the configuration of which has integrity and the above-mentioned necessary condition is satisfied (V = 3, E = 3 and 3·V- 6 = 3×3 - 6 = 3), and then add three more framework members, in different planes, for the location of each fresh node connector 1.

The second manner is to configure a configuration which consists of polyhedra, the configurations of which have integrity and which are characterized by complete vector equilibrium, e.g. octahedrons and tetrahedrons.

The third manner is to configure a configuration which consists of polyhedra, the configurations of which have integrity, just as the octahedron ***O*** and the tetrahedron ***T***, and polyhedra the configurations of which do not have integrity, just as the cubeoctahedron ***CO,*** the semi-octahedron ½***O***, the semi-cubeoctahedron ½***CO***; so that, if we consider the integrity of the configuration which is configured in this manner, the space lattice structure will be characterized by complete vector equilibrium.

In spite of the fact that, according to the first manner and with a minimum number of different framework members and node connectors 1, it is possible to configure space lattice structures, the configurations of which have structural integrity and which are characterized by complete vector equilibrium; according to the third manner we have more serviceable photovoltaic power stations and this with the maximum degree of industrialization of their construction.

With these fundamental concepts in mind, it is now possible to comprehend the description of a particular embodiment of the present invention according to the best mode contemplated for carrying it out.

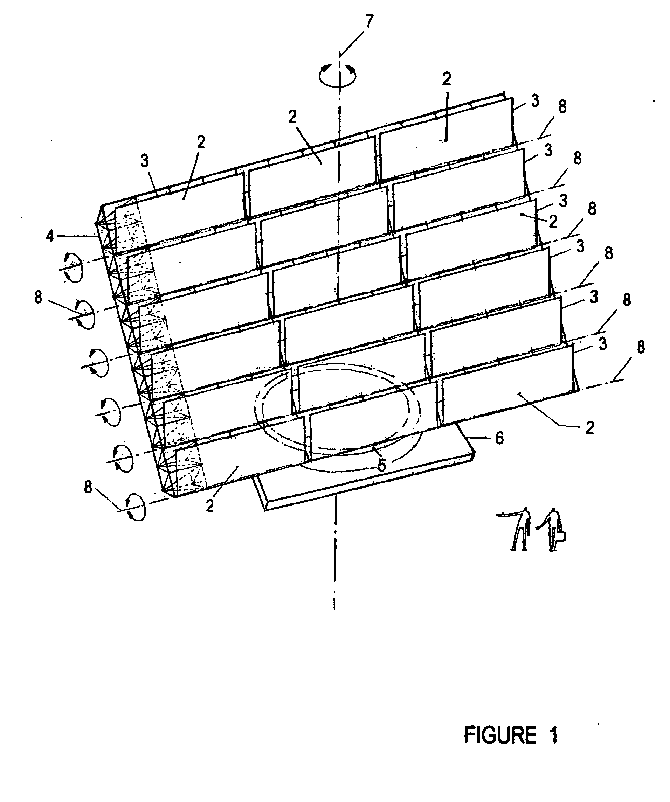

Figure 1 shows a set of arrays of photovoltaic cells 2 which are fixed on flat structures 3, a space lattice structure 4 to which the flat structures 3 are connected, and a foundation 6 having a bearing plane 5. The set of arrays of photovoltaic cells 2 is a subset of the superset of arrays of photovoltaic cells of the photovoltaic power station according to the present invention.

The space lattice structure of figure 1 rotates, with respect to the above-mentioned foundation 6, about one and only one axis 7, which is perpendicular to the bearing plane 5.

The flat structures 3, on which the arrays of photovoltaic cells 2 are fixed, rotate, with respect to the space lattice structure 4, about axes 8 which are parallel and parallel to the bearing plane 5.

The rotational movement about axis 7 is carried out in such a way that the space lattice structure 4 follows only the East - West daily movement of the sun 10, so that the rays 12 of the sun 10 are perpendicular to the parallel axes 8. The rotational movements of the flat structures 3 about the axes 8 are carried out in such a way that the planes of the arrays of photovoltaic cells 2 are perpendicular to the rays 12 of the sun 10 and, in this way, follow the elevational angle of the sun 10.

The rotational movement of the space lattice structure 4 about the axis 7 is realized with a specific rotation mechanism and the positioning is achieved through an encoder, using a software for the determination of the East-West position (the azimuthal angle) of the sun, as a function of the geographical latitude and longitude of the photovoltaic power station, the date and the time.

The rotational movements of the flat structures 3 about axes 8 are realized with rotation mechanisms and the positioning of the elevational angle of the sun is achieved through a second encoder, using a software for the determination of the elevational angle of the sun, as a function of the geographical latitude and longitude of the photovoltaic power station, the date and the time.

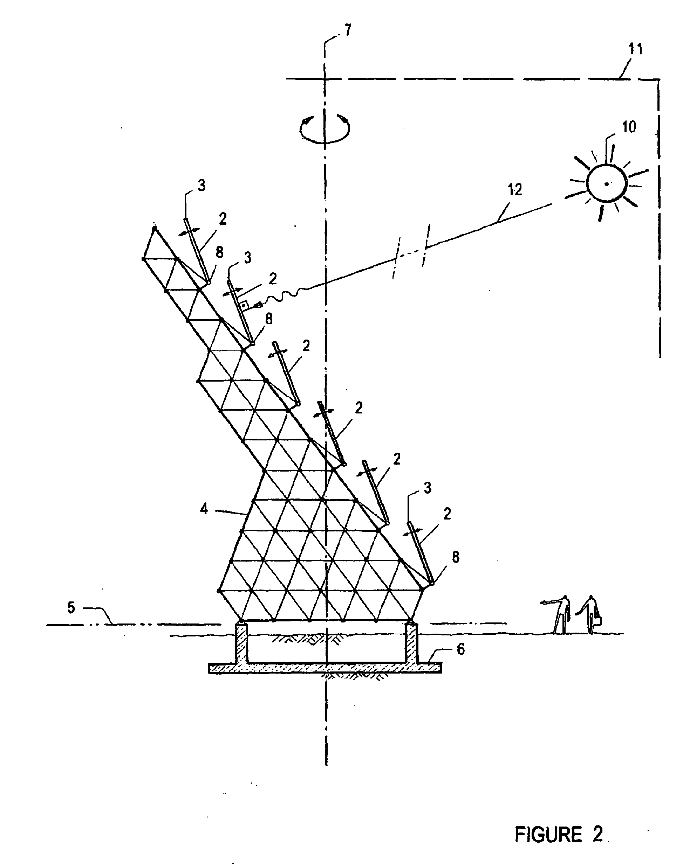

The sectional view of the space lattice structure of figure 1, which is shown in figure 2, is done by the plane which passes through axis 7 and is perpendicular to the parallel axes 8; and which in figure 2 coincides with plane 11 which is determined by the axis 7 and the center of the sun 10. The imaginary ray 12 of the sun 10 which is shown in figure 2 is perpendicular to the plane of any one of the arrays of photovoltaic cells 2.

The space lattice structure which is shown in figure 2 comprises a space lattice structure which is configured with octahedrons ***O***, tetrahedrons ***T*** and semi-octahedrons ½***O***, as has been illustrated hereinbefore and with reference to figures 4, 5 and 3, the framework members are thin walled metal tubes and the structure is realized, e.g. according to patent No. GR1004187, with identical framework members (of the same length, section and ends) and with identical node connectors 1 (of the same size; and of the same orientation and size, of holes).

If the space lattice structure of figures 1 and 2 were configured only with octahedrons ***O*** and tetrahedrons ***T***, then it could be expanded in space just in four directions (perpendicular to the four faces of any tetrahedron ***T***) and could form just four corresponding sets of parallel plane surfaces, perpendicular to these directions, for fixing arrays of photovoltaic cells 2. With the addition of the semi-octahedron ½***O***, we have one more direction and one more plane surface, that to which the flat structures 3, which bear the arrays of photovoltaic cells, are connected.

## Claims

1. A solar station configured to exploit solar energy, said solar station comprising:
- at least two solar devices (2) and at least two flat structures (3);
- at least one space lattice structure (4) having framework members and node connectors (1), said framework members being interconnected at their ends through said node connectors (1) in a configuration that consists of at least one semi-octahedron (**½*O***) and at least one tetrahedron (***T***) assembled in a face-to-face relationship;
- at least one foundation (6) having a bearing plane (5);
wherein:
- said at least two solar devices (2) are fixed on said at least two flat structures (3) respectively,
- said at least two flat structures (3) are connected to said space lattice structure (4),
- said space lattice structure (4) rotates, with respect to said at least one foundation (6), about one and only one axis (7) which is perpendicular to said bearing plane (5);
**characterized in that**:
- said solar station is a solar power station, wherein said at least two solar devices (2) are at least two arrays of photovoltaic cells (2), said solar station being a photovoltaic power station configured to generate electrical energy through solar energy;
- said framework members are pin-connected to said node connectors (1),
- said configuration has integrity, and
- said space lattice structure (4) is **characterized by** complete vector equilibrium; and the necessary condition E = 3 V -6, where the numbers of framework members and node connectors (1) are denoted by E and V respectively, is satisfied; and
- said solar station further comprises at least one octahedron (***O***), wherein said space lattice structure (4) further comprises said at least one octahedron (***O***).

2. A solar station according to claim 1, **characterized in that**:
- said space lattice structure (4) further comprises at least one cubeoctahedron (***CO***).

3. A solar station according to any preceding claim, **characterized in that**:
- said space lattice structure (4) further comprises structure at least one semi-cubeoctahedron (½***CO***).

4. A solar station according to any preceding claim, **characterized in that**:
- said at least two flat structures (3) are firmly connected to said space lattice structure (4).

5. A solar station according to any one of claims 1 to 3, **characterized in that**:
- said at least two flat structures (3) are rotationally connected to said space lattice structure (4) and rotate, with respect to said space lattice structure (4), about axes (8) respectively; and
- said axes (8) are parallel and parallel to said bearing plane (5).

## Patentansprüche

1. Eine Solarstation konfiguriert um Sonnenenergie auszunutzen, gennante Solarstation umfassend:
- mindestens zwei Solarmodulen (2) und mindestens zwei flachen Strukturen (3);
- mindestens einer Raumgitterstruktur (4), die aus Rahmenteilen und Knotenverbindungen (1) besteht, wobei gennanten Rahmenteile an ihren Enden durch gennanten Knotenverbindungen (1) miteinander verbunden sind, in einer Anordnung bestehend aus mindestens einem Semi-Oktaeder (½***O***) und mindestens einem Tetraeder (***T***) deren Flächen in einer einander gegenüber zuordnung sind;
- mindestens einem Fundament (6), das eine Tragfläche (5) hat;
wobei:
- gennanten mindestens zwei Solarvorrichtungen (2) jeweils an den gennanten mindestens zwei flachen Strukturen (3) montiert sind,
- gennanten mindestens zwei flachen Strukturen (3) an der gennanten Raumgitterstruktur (4) verbunden sind,
- gennante Raumgitterstruktur (4) rotiert in Bezug auf das gennantes mindestens ein Fundament (6) um eine einzige Achse (7), die senkrecht zur gennante Tragfläche (5) steht;
**dadurch gekennzeichnet, dass**:
- gennante Solarstation ein Solarkraftwerk ist, wobei gennanten mindestens zwei Solarvorrichtungen (2) mindestens zwei Reihen Solarzellen (2) sind, gennante Solarstation ein Photovoltaikkraftwerk ist, angeordnet, um elektrische Energie durch Solarenergie zu erzeugen; gennanten Rahmenteile mit den Knotenverbindungen (1) gelenkig verbunden sind, gennante Anordnung strukturelle Integrität besitzt, und gennante Raumgitterstruktur (4) durch ein komplettes Vektorengleichgewicht gekennzeichnet wird; und die notwendige Bedingung E=3·V-6 erfüllt ist, wobei die Anzahl der Rahmenteile und Knotenverbindungen (1) mit E bzw. V ausgedrückt wird; und
- gennante Solarstation ferner mindestens ein Oktaeder (***O***) umfasst, wobei gennante Raumgitterstruktur (4) gennantes mindestens ein Oktaeder (***O***) umfasst.

2. Eine Solarstation nach Anspruch 1, **dadurch gekennzeichnet, dass**:
- gennante Raumgitterstruktur (4) ferner mindestens ein Kuboktaeder ***(CO)*** umfasst.

3. Eine Solarstation nach jedwedem der vorangehenden Ansprüche,
**dadurch gekennzeichnet, dass**:
- gennante Raumgitterstruktur (4) ferner mindestens ein Semi-Kuboktaeder ***(½CO)*** umfasst.

4. Eine Solarstation nach jedwedem der vorangehenden Ansprüche,
**dadurch gekennzeichnet, dass**:
- gennanten mindestens zwei flachen Strukturen (3) mit der Raumgitterstruktur (4) fest verbunden sind.

5. Eine Solarstation nach jedwedem der Ansprüche 1 bis 3, **dadurch gekennzeichnet, dass**:
- gennanten mindestens zwei flachen Strukturen (3) drehverstellbar mit der gennanten Raumgitterstruktur (4) verbunden sind und in Bezug auf die Raumgitterstruktur (4) jeweils um die Achsen (8) rotieren; und
- genannten Achsen (8) parallel zueinander und parallel zur gennanten Tragfläche (5) sind.

## Revendications

1. Une centrale solaire configurée pour valoriser l'énergie solaire, ladite centrale solaire comprenant:
- au moins deux appareils solaires (2) et au moins deux structures plates (3);
- au moins une structure spatiale (4) ayant des barres et de noeuds (1), lesdites barres seront assemblées à leurs extrémités via lesdits noeuds (1) dans une configuration consistant d'au moins un semi-octaèdre (½***O***) et d'au moins un tétraèdre (***T***) montés dans une relation face-à-face;
- au moins une fondation (6) ayant un plan d'appui (5);
dans quoi:
- au moins deux appareils solaires sus-mentionnés (2) sont fixés sur au moins deux structures plates susmentionnées (3) respectivement,
- au moins deux structures plates susmentionnées (3) sont attachées à la structure spatiale susmentionnée (4),
- la structure spatiale susmentionnée (4) tourne, quant au moins une fondation susmentionnée (6), autour un seul axe seulement (7) qui est perpendiculaire au plan d'appui susmentionné (5);
**caractérisé en ce que**:
- la centrale solaire sus-mentionnée est une centrale électrique solaire, dans laquelle au moins deux appareils solaires susmentionnés (2) sont au moins deux ordres de cellules photovoltaïques (2), la centrale solaire sus-mentionnée étant une centrale solaire photovoltaïque configurée pour produire de l'énergie électrique par l'énergie solaire; lesdites barres sont attachées auxdits noeuds (1) par des articulations, ladite configuration a une intégrité, et ladite structure spatiale (4) est **caractérisée par** un équilibre de vecteur complet; et la condition nécessaire E=3·V-6, où les nombres des barres et de noeuds (1) sont dénotés par E et V respectivement, est remplie; et
- la centrale solaire sus-mentionnée comprend en plus au moins un octaèdre (***O***), dans quoi la structure spatiale susmentionnée (4) comprend, en plus, au moins un octaèdre susmentionné (***O***).

2. Une centrale solaire selon la revendication 1, **caractérisé en ce que**:
- la structure spatiale sus-mentionnée (4) comprend en plus au moins un cuboctaèdre (***CO***).

3. Une centrale solaire selon toute revendication précédente, **caractérisé en ce que**:
- la structure spatiale sus-mentionnée (4) comprend en plus au moins un semi-cuboctaèdre (½***CO***).

4. Une centrale solaire selon toute revendication précédente, **caractérisé en ce que**:
- au moins deux structures plates susmentionnées (3) sont fermement attachées à ladite structure spatiale (4).

5. Une centrale solaire selon une des revendications 1 à 3, **caractérisé en ce que**:
- au moins deux structures plates susmentionnées (3) sont attachées rotationnelement à la structure spatiale susmentionnée (4) et tournent, quant à la structure spatiale sus-mentionnée (4), autour d'axes (8) respectivement; et
- les axes sus-susmentionnés (8) sont parallèles et parallèles au plan d'appui sus-mentionné (5).
